# EUROPEAN PATENT APPLICATION

(11) **EP 1 217 845 A2**
(43) Date of publication of application: **26.06.2002**
(21) Application number: 01130315.3
(22) Date of filing: 19.12.2001
(51) Int. Cl.: H04N 9/804

(54) **Digital broadcast recording/reproducing apparatus**

(30) Priority: 19.12.2000 JP 2000384742
(71) Applicant: Kabushiki Kaisha Toshiba, Minato-ku, Tokyo 105 (JP)
(72) Inventor: Nagata, Hiroyuki, 1-1 Shibaura 1-chome, Minato-ku, Tokyo (JP); Sakamoto, Noriya, 1-1 Shibaura 1-chome, Minato-ku, Tokyo (JP); Yamada, Masahiro, 1-1 Shibaura 1-chome, Minato-ku, Tokyo (JP)
(74) Representative: Henkel, Feiler, Hänzel

(57) **Abstract**

A digital broadcast recording/reproducing apparatus which is able to determine the bit rate at the time of recording operation in accordance with the bit rate of the recorded video data and audio data, so that the bit rate at the time of reproducing operation is reduced to be lower than the bit rate at the time of recording operation is obtained. When reserving the reproduction bit rate, it prevents taking a large band superfluously. The amount of records and time for every picture, which are the coding unit of the video signal of MPEG-2, are held at the time of recording operation, and the bit rate for every picture is calculated from these data. The value somewhat higher than the maximum is set up as the reproduction bit rate, and it reproduces. By doing so, the bit rate at the time of reproducing operation can be decided in accordance with the bit rate of the recorded video and audio signals, so that the bit rate at the time of reproducing operation can be reduced to be lower than the bit rate of the TS at the time of recording operation.

## Description

The present invention relates to a digital broadcast recording/reproducing apparatus, and more particularly, to a digital broadcast recording/reproducing apparatus for recording/reproducing digital broadcast signals transmitted in the form of MPEG-2 (Moving Picture Experts Group 2) compliant transport stream (hereinafter referred to TS).

In recent years, the digital broadcast which transmits digitally encoded signals has come into service. Under the circumstances, digital broadcast receivers for receiving and recording a digital-broadcast signal without converting the signal into analog forms has been developed. For example, Japanese Laid-Open Patent Application Hei 10-28252 (hereinafter referred to as "252" patent) discloses a digital broadcast receiver capable of not only receiving but also recording/reproducing such a digital broadcast.

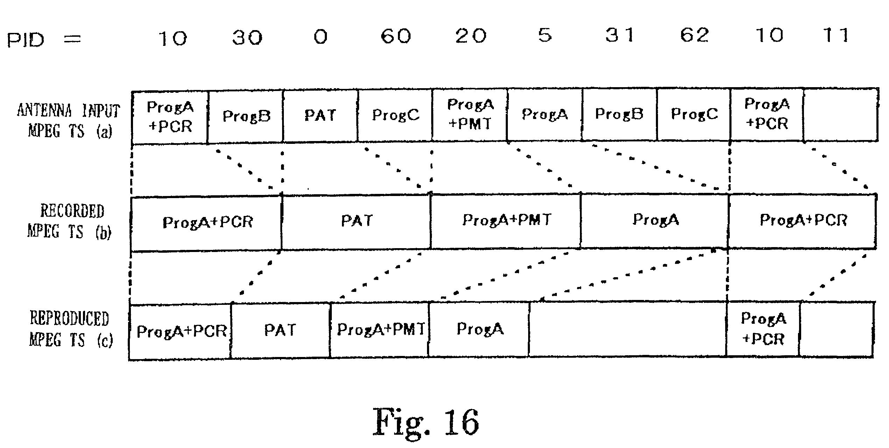

Referring now to Fig. 16, the recording/reproducing operation of the "252" patent will be briefly described. In Fig. 16, PID indicates packet IDs. When only a program A contained in an antenna input MPEG TS (a), as shown in Fig. 16, is recorded, a recorded MPEG TS (b) is arranged in a form of partial TS, as shown in Fig. 16. Upon this conversion, a recorded PCR (program clock reference) value for providing a reference clock becomes out-of-time from an original PCR value. Therefore, the recorded MPEG TS fails to be reproduced without being adjusted. Then, in reproducing operation, the partial TS is converted into a reproduced MPEG TS (c), as shown in Fig. 16, by inserting a dummy data into the TS so as that the PCR value will be reproduced at a correct timing.

However, in the recording/reproducing operation of the "252" patent, it does not mean that the reproduction bit rate is defined by the bit rate of the program to be recorded. Therefore, when reserving the reproduction bit rate, there is a problem that a too wide band is apt to be assigned at the time of reserving a reproduction bit rate.

Moreover, in the recording/reproducing operation of the "252" patent, dummy data are inserted after that video and audio data packets have been completely transferred between neighboring PCR packet data at the time of reproduction. As a result, audio data reaches the STD buffer faster than its original timing. Then there is a problem for a possibility of causing an overflow of the STD buffer.

A first object of the present invention is to provide a digital broadcast recording/reproducing apparatus which is able to determine the bit rate at the time of recording operation in accordance with the bit rate of the recorded video data and audio data, so that the bit rate at the time of reproducing operation is reduced lower than the bit rate at the time of recording operation.

A second object of the present invention is to provide a digital broadcast recording/reproducing apparatus which is able to avoid an overflow in an STD buffer by reproducing video data and audio data with null packets, while interposing the null packet among the video data and audio data in accordance with a ratio of picture bit rate and reproduction bit rate so that video and audio data packets are reproduced at times almost same times as those in recording operation.

In order to achieve the first object, a digital broadcast recording/reproducing apparatus according to a first aspect of the present invention is provided with, a tuner for receiving a digital-broadcast signal to output a predetermined TS, a recording signal generator for generating a partial TS by extracting packets associated with a prescribed broadcast program from the predetermined TS to deliver the partial TS to a record medium, a recorder for recording the partial TS delivered from the recording signal generator on the record medium, a control table processor for creating a control table with an entry of a data amount of video signals and an entry of a time information, for every time that the recording signal generator provides the record medium with a prescribed reproducing unit of the video signal contained in the partial TS, a maximum bit rate calculator for calculating bit rates of the prescribed reproducing unit of the video signal from the prescribed reproducing unit of the video signal and the time information at the time that the control table processor has created the control table, a signal processor for reproducing the partial TS from the record medium by setting the bit rate higher than the maximum bit rate by a prescribed value as a reproduction bit rate of the partial TS reproduced from the record medium, and a TS (TS) for depacketizing the partial TS provided from signal processor.

In the digital broadcast recording/reproducing apparatus according to the second aspect of the present invention, the signal processor inserts a null packet into the partial TS according to the ratio of the reproduction bit rate and the prescribed reproducing unit of the video signal at the time of reproducing the prescribed program with a normal speed.

In order to achieve the second object, a digital broadcast recording/reproducing apparatus according to a third aspect of the present invention is further provided with a free-running STC counter, and wherein the control table processor calculates a firat difference value of the STC count value and a PCR (Program Clock Reference) value, for every time that the recording signal generator detects a packet containing the PCR value from the partial TS of the prescribed program, and creates the time information of the control table from the sum of the STC count value and the first difference value, for every time that the recording signal generator provides the prescribed reproduction unit of the video signal to the record medium, and wherein the signal processor calculates a second difference value of the STC count value on the control table corresponding to the prescribed reproduction unit of the video signal and the STC count value of the STC counter, at the time that a head portion packet of the prescribed reproduction unit of the video signal reproduced from the record medium is provided to the TS decoder, and provides a data packet to the TS decoder as the head portion packet of the prescribed reproduction unit of the video signal when the STC count value on the control table corresponding to the prescribed reproduction unit of the video signal is not larger than the sum of the second difference value and the STC count value of the STC counter, and, when the STC count value is larger than the sum, the signal processor provides the TS decoder with the partial TS as a null packet at the reproduction bit rate at the time of reproducing the prescribed program with the normal reproduction speed.

In the digital broadcast recording/reproducing apparatus according to the fourth aspect of the present invention, the signal processor substitutes a PCT (Program Clock Reference) value with a sum of the STC count value of the STC counter and the second difference value, at the time that a packet containing the PCR value from the partial TS reproduced from the record medium.

Moreover, in the digital broadcast recording/reproducing apparatus according to the fifth aspect of the present invention, upon a fast-forward or fast-reverse trick play reproducing operation, the signal processor provides the TS decoder with a MPEG-2 video signal contained in the partial TS reproduced from the record medium, by not only adding a packet having the STC count value on the control table corresponding to the prescribed reproducing unit as the PCR value before providing the prescribed reproducing unit of the video signal to the TS decoder, but also setting a discontinuity indicator flag to the packet.

Moreover, in the digital broadcast recording/reproducing apparatus according to the sixth aspect of the present invention, the signal processor replaces the PCR value or a time-stamp value with the STC count value of the STC counter, when the PCR value or the time-stamp value has been detected.

Moreover, the digital broadcast recording/reproducing apparatus according to the seventh aspect of the present invention, the prescribed reproducing unit is a GOP or a picture data at a coding unit of the MPEG-2 video signal.

Moreover, in the digital broadcast recording/reproducing apparatus according to the eighth aspect of the present invention, the signal processor detects at least one of a Payload Unit Start Indicator contained in the TS and a Random Access Indicator contained in an Adaptation Field, or at least one of a Sequence Header Code, a Group Start Code and a Picture Start Code contained in the video stream for detecting the prescribed reproduction unit of the video signal.

Moreover, in the digital broadcast recording/reproducing apparatus according to the ninth aspect of the present invention, at a time of reproducing accumulated TSs with a fixed bit rate, a maximum bit rate or a bit rate higher than the maximum bit rate by a prescribed value is reproduced by being set as a reproduction bit rate of the partial TS.

Moreover, the digital broadcast recording/reproducing apparatus according to the tenth aspect of the present invention is provided with a depacketizer, and wherein, at a time of normal speed reproduction, the depacketizer provides data packets, while interposing null packets among the data packets in accordance with a ratio of the reproduction bit rate and the fixed bit rate.

Moreover, in the digital broadcast recording/reproducing apparatus according to the eleventh aspect of the present invention, wherein, upon detection of packet containing a first PCR value after an initiation of normal reproduction, a difference value of the PCR value and a free-running STC count value is detected, and wherein, upon detection of packet containing following PCR, the PCR is replaced by a sum of the difference value and the STC count value.

Additional objects and advantages of the present invention will be apparent to persons skilled in the art from a study of the following description and the accompanying drawings, which are hereby incorporated in and constitute a part of this specification.

A more complete appreciation of the present invention and many of the attendant advantages thereof will be readily obtained as the same becomes better understood by reference to the following detailed description when considered in connection with the accompanying drawings, wherein:
Fig. 1 is a block diagram showing a digital broadcast recording/reproducing apparatus according to the present invention;
Fig. 2 is a flow-chart for explaining a recording operation of the digital broadcast recording/reproducing apparatus according to the present invention;
Fig. 3 is an exemplary control table;
Fig. 4 is a drawing for explaining STC count value to be described on the control table at the time of recording operation;
Fig. 5 is a flow-chart for explaining a normal reproducing operation of the digital broadcast recording/reproducing apparatus according to the present invention;
Fig. 6 is a diagram for normally explaining the STC count value and the STC count value on the control table at the time of the normal speed reproducing operation;
Fig. 7 is a diagram for explaining an operation of controlling output according to the ratio of the reproduction bit rate and the picture bit rate at the time of the normal speed reproducing operation;
Fig. 8 is a diagram of the bit rate when reproducing TS of the fixed bit rate by the fixed reproduction bit rate higher than it.
Fig. 9 is a diagram for explaining a control of output in accordance with a ratio of reproduced signal bit rate a picture bit rate during a normal speed reproducing operation;
Fig. 10 is a flow-chart for explaining the process at the time of the normal speed reproducing operation.
Fig. 11 is a flow-chart showing a fast-forward and fast-reverse reproducing operations of the digital broadcast recording/reproducing apparatus according to the present invention, and which already shows return reproducing operation;
Fig. 12 is a flow-chart showing another fast-forward and fast-reverse reproducing operations of the digital broadcast recording/reproducing apparatus according to the present invention;
Fig. 13 is a drawing for explaining the operation of inserting the PCR packet in the embodiment, as shown in Fig. 11;
Fig. 14 is a drawing for showing transition of the STC count value on the stream of the case of the operation shown in Fig. 11;
Fig. 15 is a drawing for showing transition of the STC count value on the stream of the case of the operation shown in Fig. 12; and
Fig. 16 is a drawing for showing recording/reproducing operation of the conventional example.

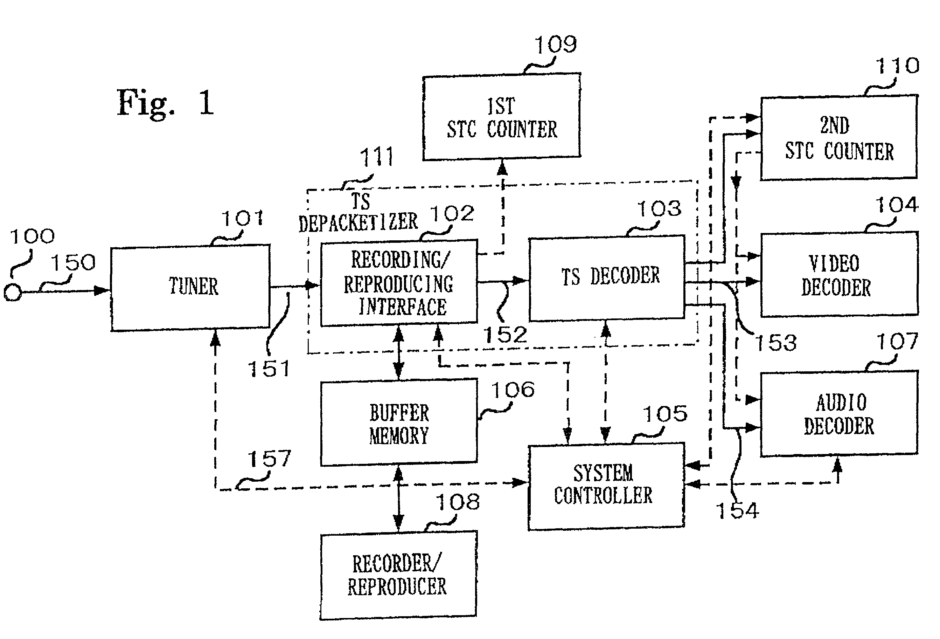

The present invention will be described in detail with reference to the Figs. 1 through 15.

Fig. 1 is a block diagram showing a digital broadcast recording/reproducing apparatus.

In Fig. 1, an antenna terminal 100 receives a digital broadcast signal 150 through an antenna (not shown) and delivers the digital broadcast signal 150 to a tuner 101.

The tuner 101 selects a desired channel and extracts a TS 151 of the selected channel under the control of a control signal 157 from a system controller 105. The TS 151 is then delivered to a TS depacketizer 111. Here, the tuner 101 usually carries out an error correction on the TS 151.

The TS depacketizer 111 is comprised of a recording/reproducing interface 102 and a TS decoder 103.

The recording/reproducing interface 102 extracts only packets associated to a desired program, and records the partial TS on a record medium loaded in a recorder/reproducer 108 through a buffer memory 106.

Moreover, the recording/reproducing interface 102 outputs the partial TS which output the TS 151 delivered from the tuner 101 to the TS decoder 103 as it was, or was read from the record medium loaded in the recorder/reproducer 108 to the TS decoder 103.

The TS decoder 103 depacketizes a video data and an audio data which are section data of the signal delivered from the recording/reproducing interface 102. The depacketized video data 153 and audio data 154 are respectively delivered to a video decoder 104 and an audio decoder 107. The signals 152 output from the TS decoder 103 could be transmitted through an IEEE1394 interface (not shown). The video decoder 104 and the audio decoder 107 decode the video signal and audio signal which were input, respectively, and delivers the decoded video and audio signals to an external equipment.

Moreover, the TS decoder 103 delivers a PCR value to a second STC counter 110, and reproduces the clock signal of a sending area. And the clock signal reproduced by the second STC counter 110 is delivered to the video decoder 104 and the audio decoder 107, and reproducing operation is accomplished, while synchronizing a video data and an audio data.

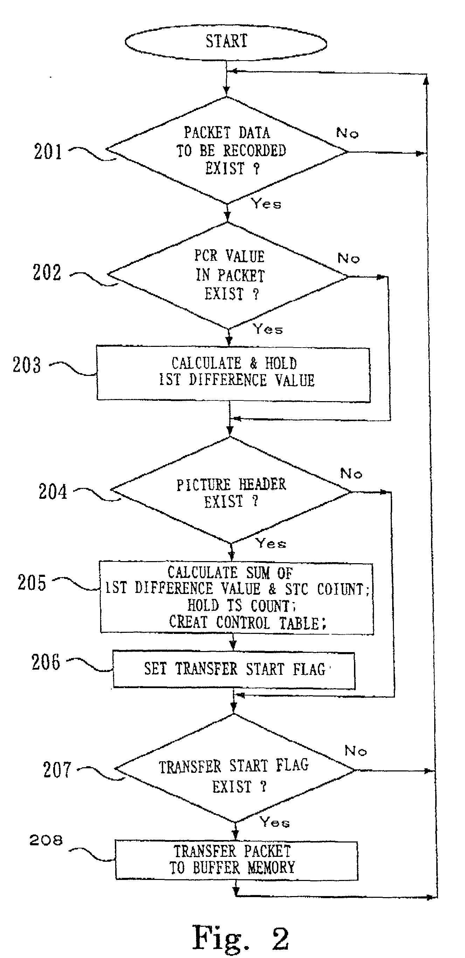

Referring now to Figs. 2, 3 and 4, a recording operation of the above-described embodiment will be described in detail below.

Fig. 2 is a flow-chart for explaining a first operation of the recording/reproducing interface 102 for recording, according to the present invention.

Firstly, in decision step 201, it is checked whether or not a packet data to be recorded exists in the TS 151.

If a negative result "No" is obtained in the decision step 201, the process returns to the decision step 201. Moreover, if a positive result "Yes" is obtained in the decision step 201, the process advances to decision step 202 where it is checked whether or not a PCR value exists in the data packet to be recorded.

If a negative result "No" is obtained in the decision step 202, the process advances to decision step 204, which will be described later.

If a positive result "Yes" is obtained in the decision step 202, the process advances to execution step 203 where the interface reads out an STC count value of a free-running STC counter 109, as shown in Fig. 1, for calculating a difference value α 0 between the count value and the PCR value and for holding the difference value. Furthermore, a flag indicating that the difference α 0 has been held is set. The execution step 203 is repeated every time that a data packet including the PCR value arrives.

The process then advances to the decision step 204.

In the decision step 204, it is checked whether or not the flag indicating that a difference value α 0 has been held exists, and also whether or not the picture header exists in a data packet to be recorded. If a negative result "No" is obtained in the decision step 204, the process advances to decision step 207, which will be described later.

If a positive result "Yes" is obtained in the decision step 204, the process advances to execution step 205 wherein following three operations (1) to (3) are executed.
(1) Operations of reading an STC count value from the first STC counter 109, adding the read STC count value with the held difference value α 0, and then recording the sum thereof to the control table as a corrected STC count value.
(2) Operation of holding a count of TS packet to be recorded in the buffer memory 106.
(3) Operations of preparing STC count value and a count of transfer packets as control table data.

The preparation of the operation (3) can be carried out in the recording/reproducing interface 102 or the system controller 105.

The process then advances to execution step 206 where a transfer start flag is set at the time of starting transfer.

The process then advances to the decision step 207 where it is checked whether or not a flag representing the transfer start position exists. If a negative result "No" is obtained in the decision step 207, the process returns to the decision step 201. If a positive result "Yes" is obtained in the decision step 207, the process advances to execution step 208 where packet data are transferred to the buffer memory 106 so as to start a recording operation from the picture head portion after a PCR value has been detected. The process then returns to the decision step 201 for waiting a next packet data.

When a certain amount of packet data have been accumulated in the buffer memory 106, the packet data are transmitted and recorded on a record medium loaded in the recorder/reproducer 108 from the buffer memory 106 under the control of the system controller 105.

In an alternative recording operation, along with control table data are held in the buffer memory 106, the control table data can be recorded into a record medium loaded in the recorder/reproducer 108 Or the buffer memory 106 is possible also for storing in an another memory and an another card (not shown).

Moreover, what is necessary is to detect Payload Unit Start Indicator in a TS header, Random Access Indicator in an adaptation field, or either one of Sequence Header Code, Group Start Code and Picture Start Code in a video data stream, in order to detect a picture head portion at the time of recording operation.

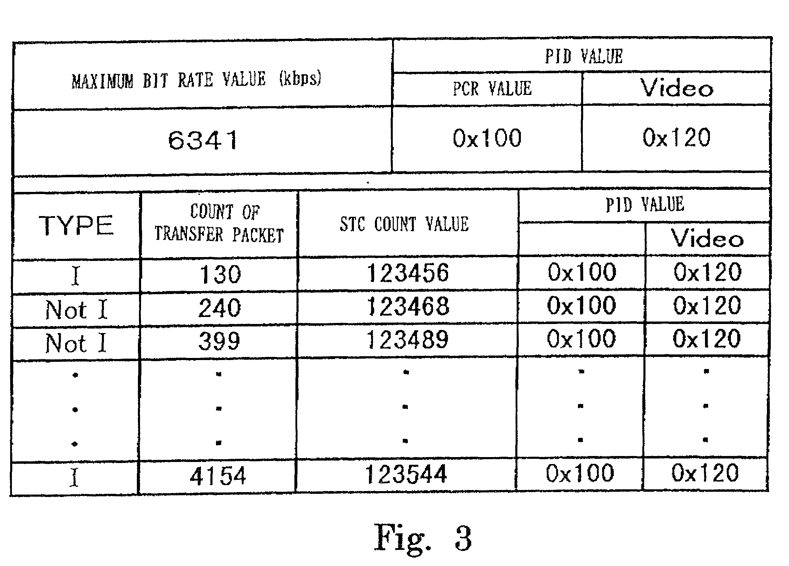

Fig. 3 shows an exemplary control table.

Control information is configured to be generated for each of the I-pictures of the video signal, and it is made to describe the number of transfer packets, an STC count value, and a PID value for the picture type further in the TYPE column. Moreover, it is good also considering the number of transfer packets as a transfer byte count on the control table. Moreover, the composition which records a service id value instead of a PID value is also considered. This STC count value is equivalent to the time information when reproducing.

The maximum bit rate value records a maximum bit rate among the bit rates (i.e., bit rates for every picture) calculated from the transfer byte count value and the STC count value of each picture. Since VBR (variable bit rate) encoding also normally serves as the fixed bit rate per picture in a video signal, this because bit rates should be calculated for each of the pictures.

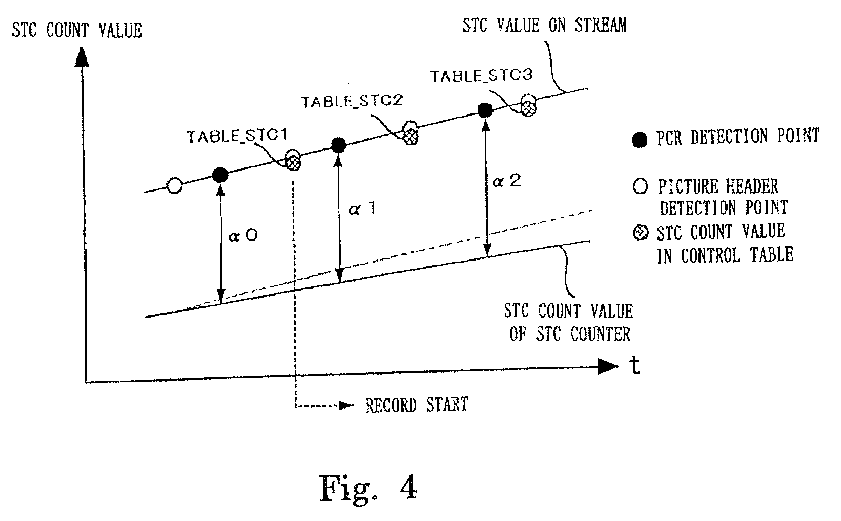

The relation of the STC count value of the first STC counter 109 and the STC count value described to the control table is shown in Fig. 4.

First, a PCR value is detected, and then a difference value α 0 between the PCR value and the STC count value of the STC count 109 is calculated.

Next, the STC count value of the first STC counter 109 at the time of detecting a picture head portion and difference -- by making into the STC count value on the control table the value which added the value α 0, this STC count value is mostly recordable as an STC count value on a stream Next, when a PCR value is detected, a difference value α 1 between the PCR value and the STC count value of the first STC counter 109 is calculated in the same manner as the calculation of the former difference value α 0, and then substituted by the difference value.

Only a desired program can be extracted and recorded by repeating the above-described operation.

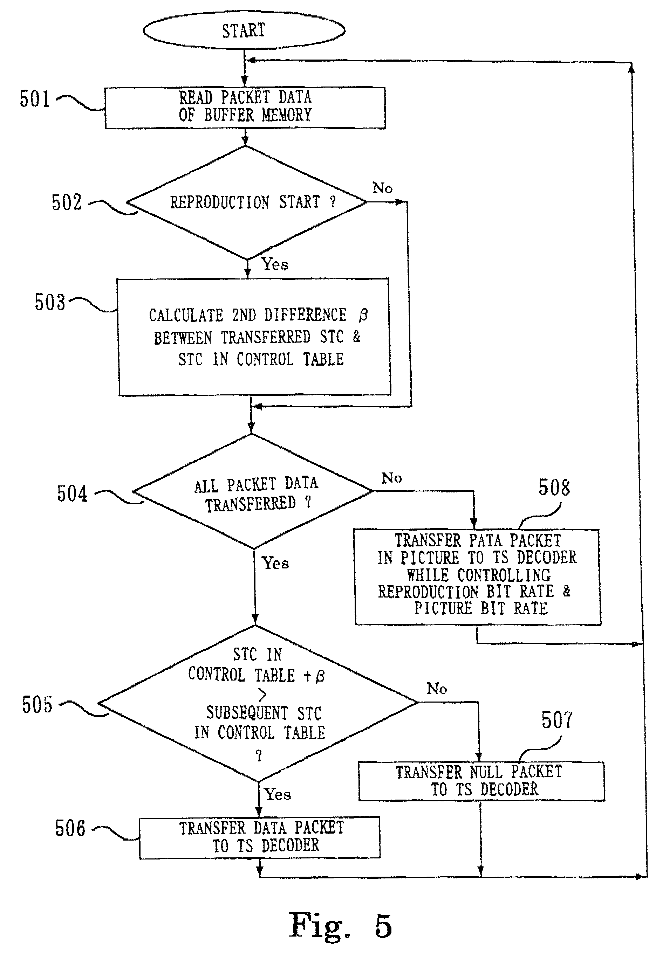

Referring now to Figs. 5 - 7, a reproducing operation of the apparatus, as shown in Fig. 1, will be described in detail below.

The reproduction bit rate is designated by the system controller 105 to the recording/reproducing interface 102. What is necessary is just to set up the reproduction bit rate value on the control table, or a value with only a certain bigger value than it as this reproduction bit rate. Therefore, a value corresponding to the sum of the bit rate of the video signal, the audio signal and the like at the time of recording operation can be set for the reproduction bit rate. It becomes unnecessary to set up greatly too much the bit rate value reserved when following, for example, outputting the output of the recording/reproducing interface 102 to IEEE 1394.

Fig. 5 is a flow-chart for explaining reproducing operation of the digital broadcast recording/reproducing apparatus according to the present invention performed in the recording/reproducing interface 102.

When a reproducing operation is designated, packet data reproduced from the record medium loaded in the recorder/reproducer 108 is temporarily stored in the buffer memory 106, and after that it is captured by the recording/reproducing interface 102 (step 501). The captured packet data is transferred to the TS decoder 103.

Next, the process advances to decision step 502 where it is checked whether or not the recording/reproducing interface 102 has been directed to start the reproducing operation by the system controller 105.

If a negative result "No" is obtained in the decision step 502, the process advances to decision step 504, which will be described later. Moreover, if a positive result "Yes" is obtained in the decision step 502, the process advances to execution step 503 where the STC count value of the first STC counter 109 at the time of transferring the first packet at the start of reproducing operation is held. Furthermore, a difference value β between the STC count value and the STC count value in the control table is calculated and held

Next, the process advances to the decision step 504 where it is checked whether or not all the data packets in a picture were transferred. If a positive result "Yes" is obtained in the decision step 504, the process advances to decision step 505 where it is checked whether or not the sum of the STC count value in the control table and the difference β is larger than the next picture's STC count value.

If a positive result "Yes" is obtained in the decision step 505, the process advances to execution step 506, the data-packet transfer to the TS decoder 103 will be started, and the process returns to the execution step 501. If a negative result "No" is obtained in the decision step 505, since it does not yet reach the time for transmitting the picture, the process advances to execution step 507, where a null packet is transferred to the TS decoder 103, and the process returns to the execution step 501.

If a negative result "No" is obtained in the decision step 504, the process advances to execution step 508, and it will transmit to the TS decoder 103, while controlling the data packet in a picture from the reproduction bit rate and the picture bit rate, and will return to the execution step 501.

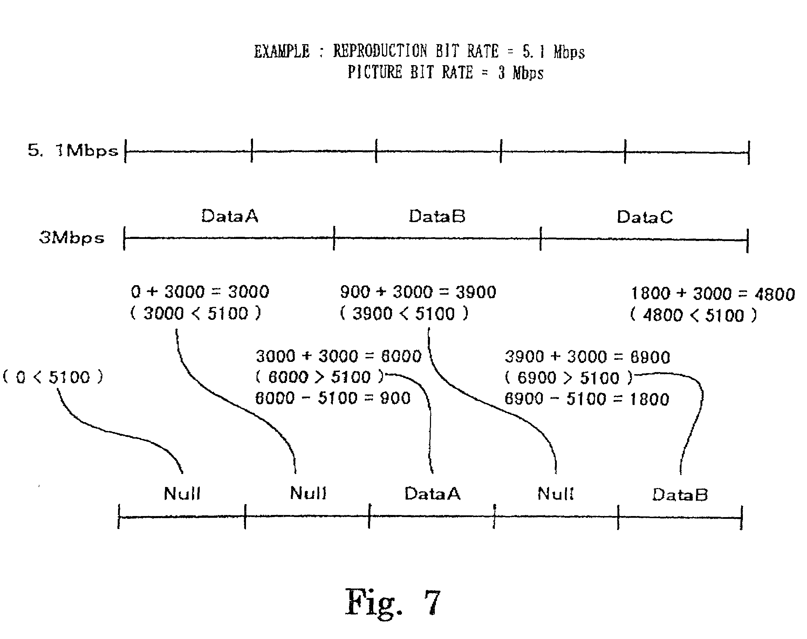

The control of transferring the packet to the TS decoder 103 will be described in detail later in reference to Fig. 7

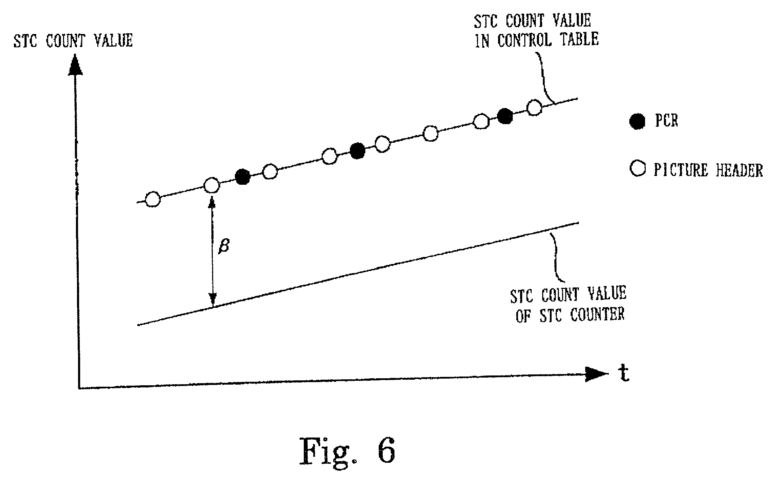

Moreover, in the recording/reproducing interface 102 when a packet containing PCR value (not shown) is detected in the TC packet from the buffer memory 106, the PCR value is replaced with a sum of the STC count value of the STC counter 109 and the difference β. The above operation is illustrated, as shown in Fig. 6. The jitter in a PCR value can be reduced by doing in such a way. After replacing a PCR value, the packet is delivered to the TS decoder 103.

Referring now to Fig. 7, the data transfer control of those other than a picture head portion will be described.

Now a case where the reproduction bit rate is 5.1 Mbps and the reproduction picture bit rate is 3 Mbps will be discussed. In a principal control, when the picture bit rate is accumulated in the recording/reproducing interface 102 and then the accumulated value exceeds a reproduction bit rate value, a data packet is delivered to the TS decoder 103.

First, a value of 0 bps is compared with the bit rate value of 5,100 kbps in the recording/reproducing interface 102. Then based on the resulted relation "0 < 5,100", a null packet is delivered to the TS decoder 103.

Next, incrementing a value of 3,000 kbps and then based on the resulted relation "0 + 3,000 kbps < 5,100 kbps", another null packet is continuously delivered to the TS decoder 103.

Next, still incrementing by 3,000 kbps and then based on the resulted relation "3,000 + 3,000 > 5,100", a data packet A is delivered to the TS decoder 103. Here, also the difference of the left and right side, i.e., "6,000 - 5,100 = 900" is held.

Next, incrementing a value of 3,000 kbps and then based on the resulted relation of "900 + 3,000 < 5,100", a null packet is transferred to the TS decoder 103.

By repeating the above-described operations, data packets can be output in accordance with the ratio of the picture bit rate and the reproduction bit rate.

Moreover, the data packet of a video data and an audio data can be output by the data rate almost equal to the time of record, and overflow of a STD buffer can be made to avoid.

According to the above-described process, recorded data can be reproduced not at the bit rate of the TS at the time of recording operation but at the bit rate of the TS of the recorded signal. Therefore, since the signal band is not blindly secured widely when outputting the output of the recording/reproducing interface 102 to IEEE1394, the band to consume can be reduced.

In this embodiment, the steps 504 to 507 could be omitted so as that the process jumps from the execution step 503 directly to the execution step 508. That is, an alternative reproducing operation by only the transfer control, as illustrated in the execution step 508, may also be configured, regardless of that whole packets in the picture has been transferred or not.

Now, a time designated skip reproducing operation which continues reproduction by skipping a designated time will be described.

When a skipping time is designated, the skipping time is converted to an STC count value in the system controller 105.

Next, a sum of the converted STC count value and an STC count value corresponding to pictures currently under reproduction is calculated, and then an STC count value which is most close to and not exceed the sum is retrieved from the control table as the STC count value of the target GOP head portion to be skipped.

Next, a count of packets for skipping to a GOP head picture corresponding to the calculated STC count value is retrieved from the control table. Next, under the control of the system controller 105, a file pointer for the file recorded in the record medium loaded in the recorder/reproducer 108 is shifted by the storage capacity corresponding to the count of packets, and the data at the position to skip thereto is read out from the record medium loaded in the recorder/reproducer 108. The data of the skipped position are once stored in the buffer memory 106, and then delivered to the recording/reproducing interface 102. Operations following the above operations are the same as those in the normal reproduction operation.

According to the above operations, a skip reproduction which is correct in skipping time and fast in operation can be implemented.

Referring now to Figs. 1, 8 and 10, an operation for reproducing TSs at a fixed bit rate from the record medium loaded in the recorder/reproducer 108 will be described.

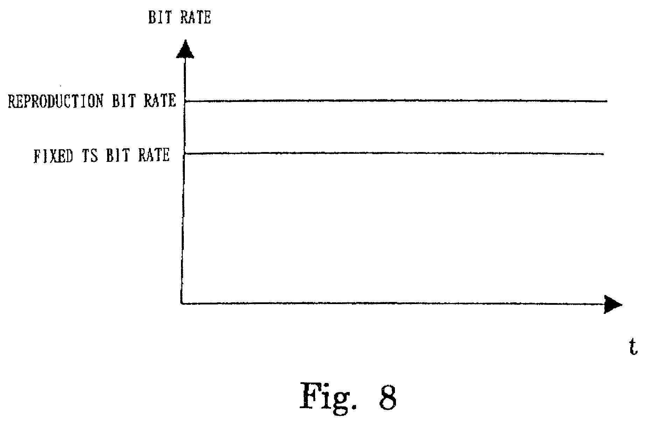

Here, Fig. 8 is a drawing showing bit rates at the time of reproducing operation where TS are reproduced at a fixed bit rate higher than the fixed TS bit rate.

Referring again to Fig. 1, the system controller 105 designates a reproduction bit rate to the recording/reproducing interface 102.

The reproduction bit rate is just needed to be set to the fixed bit rate value of the accumulated TS or a value larger than the bit rate by a certain value.

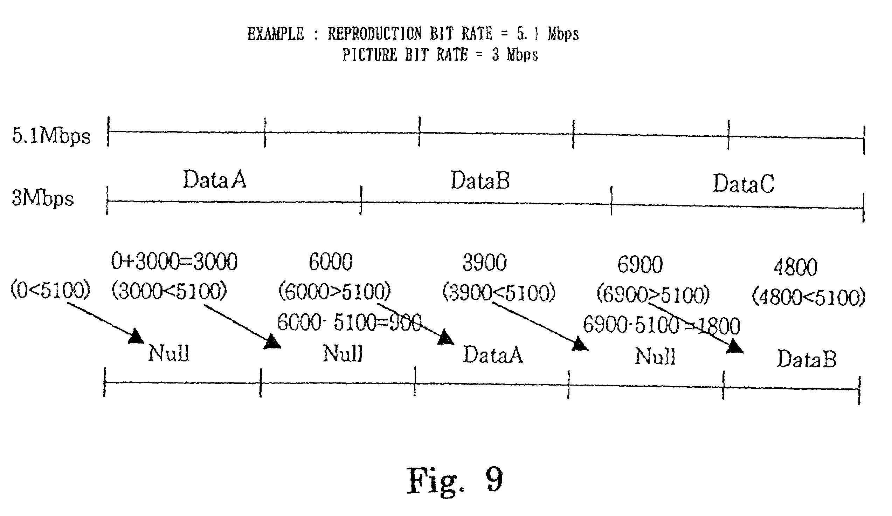

Here, a data transfer control will be described in reference to Fig. 9.

Now a case where the reproduction bit rate is 5.1 Mbps and the TS bit rate is 3 Mbps will be discussed.

In a principal control, when the fixed bit rate of the TS is accumulated and the then the accumulated value exceeds the reproduction bit rate value, a data packet is output.

First, a value of 0 bps is compared with the bit rate value of 5,100 kbps. Then based on the resulted relation "0 < 5,100", a null packet is transferred.

Next, incrementing a value of 3,000 kbps and then based on the resulted relation "0 + 3,000 kbps < 5,100 kbps", another null packet is continuously output.

Next, incrementing the same value of 3,000 kbps and then based on the resulted relation "3,000 + 3,000 > 5,100", still another null packet is continuously output. Here, also the difference of the left and right side, i.e., "6,000 - 5,100 = 900" is held.

Next, incrementing a value of 3,000 kbps and then based on the resulted relation of "900 + 3,000 < 5,100", a null packet is transferred.

By repeating the above operation, the accumulated TSs can be transferred at a fixed bi rate.

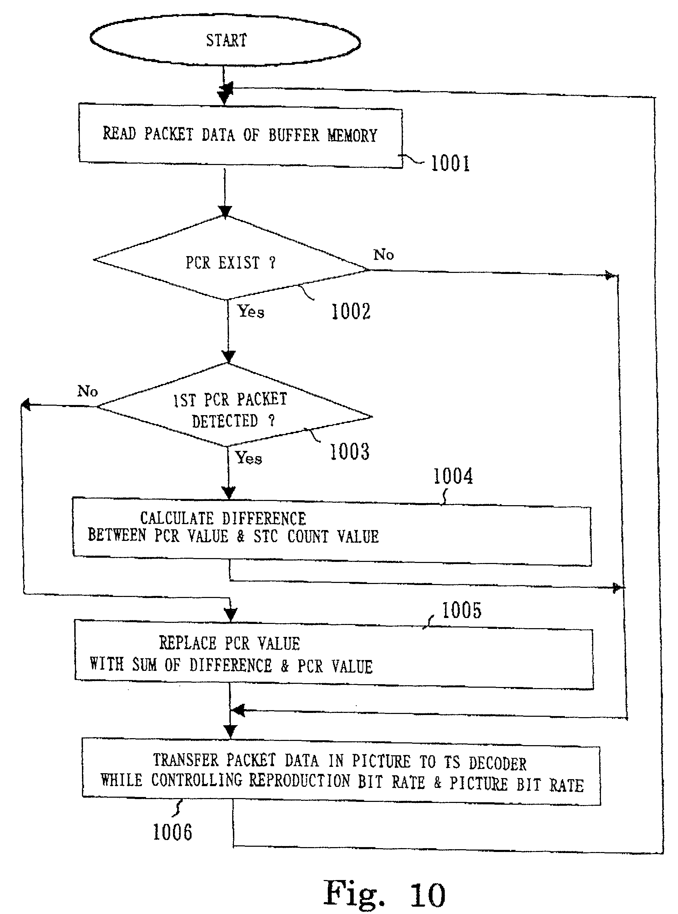

Here, Fig. 10 shows an alternative reproducing operation at the time of the normal speed reproducing operation.

In Fig. 10, a packet is first obtained from the buffer memory 106 in execution step 1001.

Next, the process advances to decision step 1002 where it is checked whether or not the packet obtained from the buffer memory 106 contains a PCR packet. When a first PCR packet after the start of reproducing operation is detected (decision step 1003), in the execution step 1004 the recording/reproducing interface 102 holds the difference of the PCR value and the STC count value of the STC counter. Here, it may be configured to replace the difference with a sum of the difference and the STC count value of the STC counter when a subsequent PCR packet is detected.

If a negative result "No" is obtained in the decision step 1002, the process advances to execution step 1006, and it will transmit to the TS decoder 103, while controlling the data packet in a picture from the reproduction bit rate and the picture bit rate, and will return to the execution step 1001. Moreover, if a positive result "No" is obtained in the decision step 1003, the process advances to execution step 1005, the STC count value of the first STC counter 109 will be read, and a PCR value will be replaced with the read STC count value. The jitter in a PCR value can be eliminated by doing in such a way. The difference value may be substituted for every time that the PCR packet is detected, instead of substituting only once with the first detection.

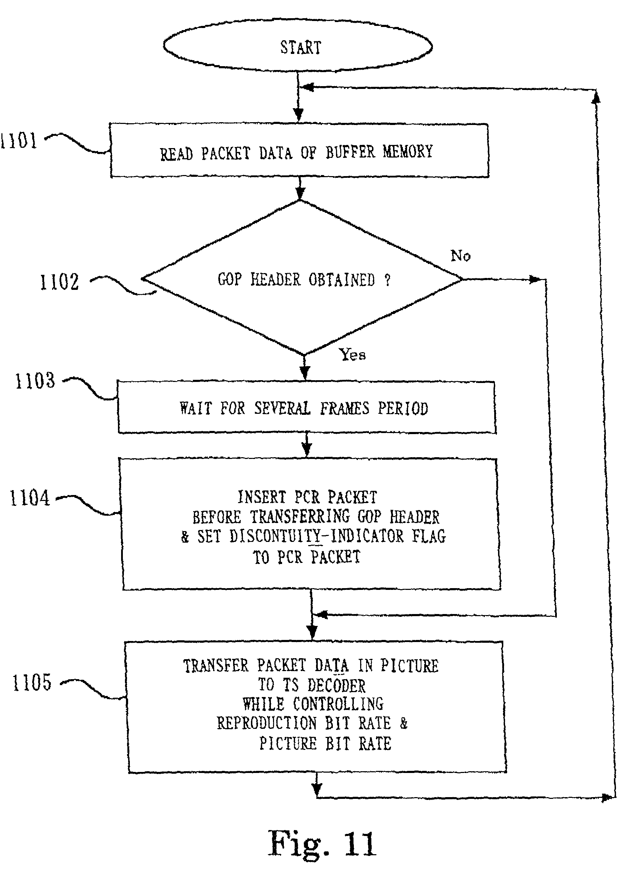

Referring now to Figs. 11, 13 and 14, a first example of high-speed fast-forward/fast-reverse trick play reproducing operations at a desired speed will be described

First, a fast-forward reproducing operation which is carried out by reading out only desired GOP data from the record medium loaded in the recorder/reproducer 108 will be described.

When a reproduction speed is designated, only GOP data associated with the designated reproduction speed are read out under the control of the system controller 105 from a record medium loaded in the recorder/reproducer 108, according to the TYPE and the count of transfer packets on the control table, shown in Fig. 3a. The read data are once stored in the buffer memory 106 and then delivered to the recording/reproducing interface 102.

Referring now to Fig. 11, the operation of the recording/reproducing interface 102 in the trick play reproducing operation will be described below. Fig. 11 is a flow-chart for explaining special reproducing operation of the digital broadcast recording/reproducing apparatus according to the present invention performed in the recording/reproducing interface 102.

First, an operation of the recording/reproducing interface 102 will be described in detail. In execution step 1101, a packet is first obtained from the buffer memory 106.

Next, the process advances to decision step 1102 where it is checked whether or not the packet obtained from the buffer memory 106 is a packet of a GOP head portion. If a negative result "No" is obtained in the decision step 1102, the process advances to execution step 1105, which will be described later. If a positive result "Yes" is obtained in the decision step 1102, the process advances to a waiting step 1103 where the process waits for several frames period so as to avoid an overflow in the STD buffer of the video decoder.

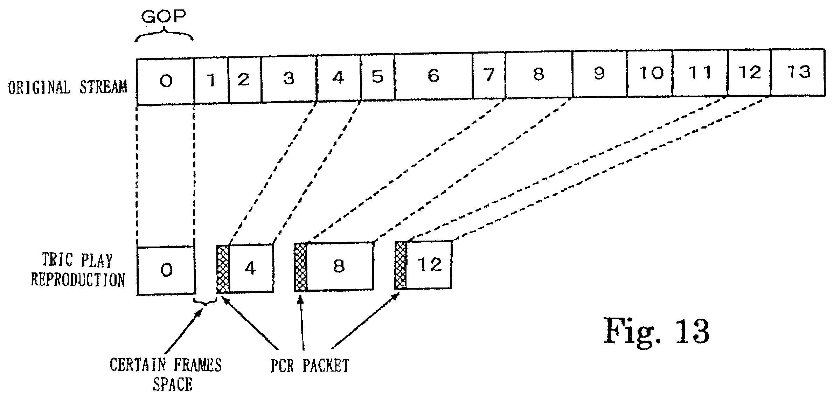

After waiting for several frame periods at the waiting step 1103, the process advances to execution step 1104 where a packet containing a PCR value is inserted, before transferring the GOP head packet to the TS decoder 103. That is, as shown in Fig. 13, along with inserting PCR packet with a PCR value for the STC count value just before transferring the GOP head portion data, a discontinuity indicator flag for indicating data discontinuity is set to the PCT packet.

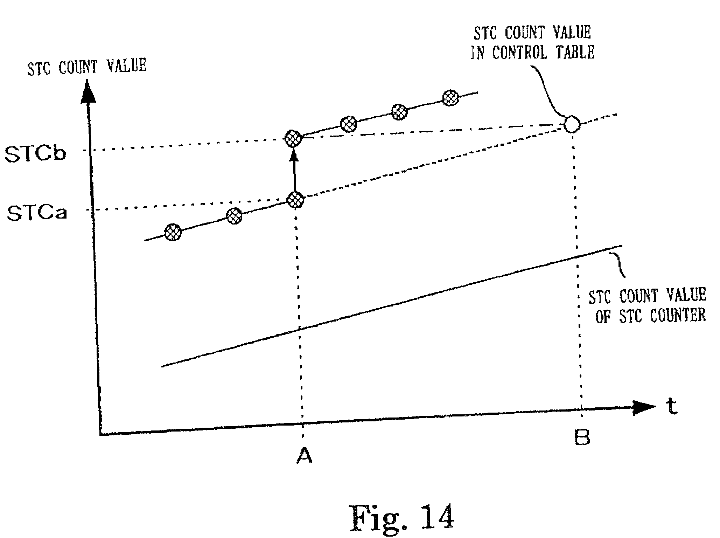

The data on the control table is used as the PCR value and the PID value which are contained in the PCR packet created by the recording/reproducing interface 102. The STC count value on the control table is because it corresponds to the time on a stream as shown in Fig. 14. What is necessary is just to insert the STC count value STCb on the control table at the Time B as a PCR value in Fig. 14, in continuing at the data packet of Time A and reading the data packet of Time B from a record medium loaded in the recorder/reproducer 108.

Next, the process advances to the execution step 1105, and it transmits to the TS decoder 103, while controlling the data packet in a picture from the reproduction bit rate and the picture bit rate, and returns to the execution step 1101.

Consequently, after setting the timing which transmits a PCR packet and GOP data during several frame period at the waiting step 1103 so that the STD buffer of a video decoder may not overflow as it is shown in Fig. 13, it transmits GOP data to the TS decoder 103. Furthermore, after setting during several frame period at the waiting step 803 again, the following PCR packet and the following GOP data are transferred to the TS decoder 103.

It is because that, by doing in such a way, it becomes possible to decode without changing the time base of a stream for each of the GOP data, and a video decoder and an audio decoder looking at a time-stamp each time.

In this example, although it is made to transmit all GOP data, only I-pictures in the GOP data may be transmitted instead of the GOP data. A fast-reverse operation can be also implemented according to a control as mentioned above.

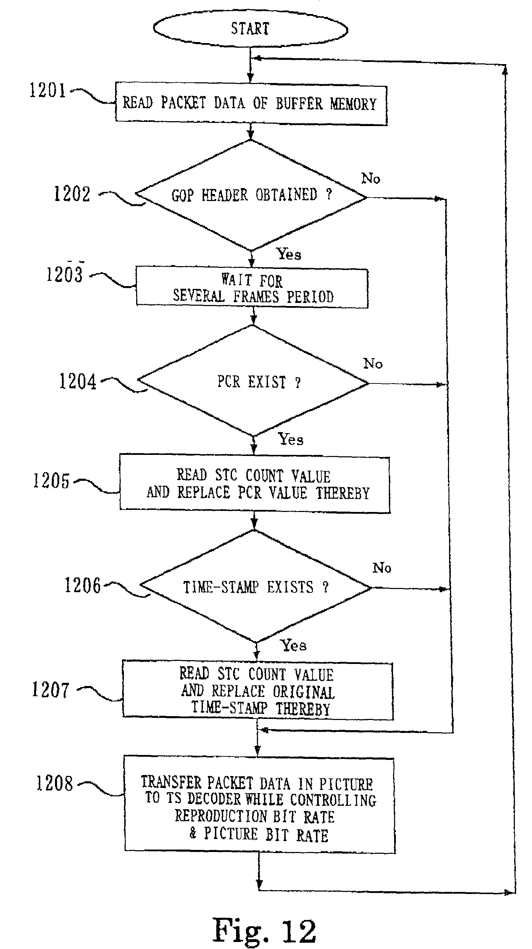

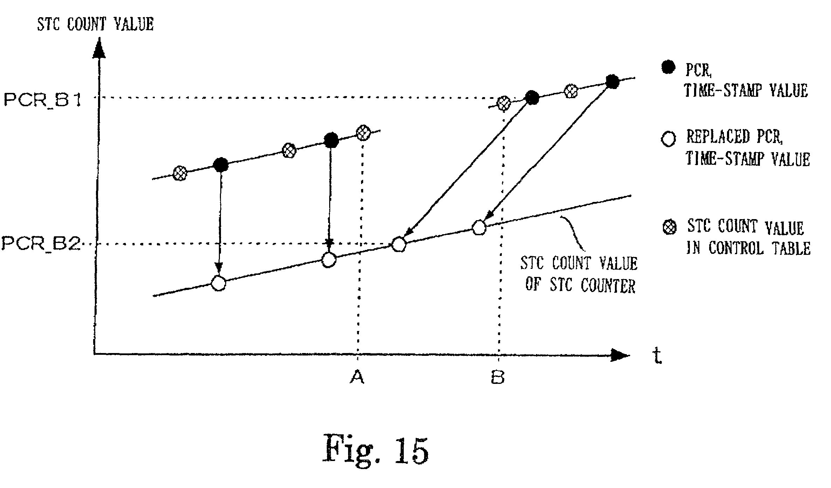

Referring now to Figs. 12 and 15, a second example of high-speed fast-forward/fast-reverse reproducing operations will be described in detail below.

How to read only desired GOP data from a record medium loaded in the recorder/reproducer 108 first, and carry out rapid-traverse reproduction will be described.

The system controller 105 controls the recording/reproducing interface 102 to reads out only the GOP data associated for 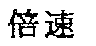 of the TYPE and the number of transfer packets on the control table shown in Fig. 3 to a request to the buffer memory 106 from a record medium loaded in the recorder/reproducer 108. And the read data are input into the recording/reproducing interface 102 from the buffer memory 106.

Referring now to Fig. 12, operation of the recording/reproducing interface 102 will be described in detail.

First, a fast-reverse reproducing operation control of the recording/reproducing interface 102 will be described below. Fig. 12 is a flow-chart of the digital broadcast recording/reproducing apparatus according to the present invention performed in the recording/reproducing interface 102 which already shows return reproducing operation.

A packet is first obtained from the buffer memory 106 in execution step 1201.

Next, the process advances to decision step 1202 where it is checked whether or not the packet obtained from the buffer memory 106 is a packet of a GOP head portion. If a negative result "No" is obtained in the decision step 1202, the process advances to execution step 1208, which will be described later. Moreover, if a positive result "Yes" is obtained in the decision step 1202, the process advances to a waiting step 1203 where it is checked whether or not a GOP head packet exists. If then the GOP head packet is detected "Yes", the process advances to the waiting step 1203 where the process waits for several frame periods so as to avoid an overflow in the STD buffer of the video decoder.

The operations heretofore are the same as those in Fig. 11.

The process then advances to decision step 1204 where it is checked whether or not the PCR value exists in the packet which is obtained in the waiting step 1203. If a negative result "No" is obtained in the decision step 1204, the process advances to the execution step 1208. Moreover, if a positive result "Yes" is obtained in the decision step 1204, the process advances to execution step 1205, the STC count value of the first STC counter 109 will be read, and a PCR value will be replaced with the read STC count value.

Next, the process advances to decision step 1206 where it is checked whether or not the time-stamp is contained in the data packet having a replaced PCR value. If a negative result "No" is obtained in the decision step 1206, the process advances to the execution step 1208. Moreover, if a positive result "Yes" is obtained in the decision step 1206, the process advances to execution step 1207, the STC count value of the first STC counter 109 will be read, and a time-stamp value will be replaced based on the read STC count value.

However, what is necessary is to accept it 33 bits of Base portions in 42-bit STC count value, and just to use it, since the accuracy of the time-stamp of PES (Packetized Elementary Stream) of MPEG-2 is 33 bits.

Next, the process advances to the execution step 1208, and it transmits to the TS decoder 103, while controlling the data packet in a picture from the reproduction bit rate and the picture bit rate, and returns to the execution step 1201.

A data packet is output after replacing a PCR value and a time-stamp as mentioned above.

This replacing operation will be described still in detail in reference to Fig. 15.

In Fig. 15, in continuing at the data packet of Time A and reading the data packet of Time B from a record medium loaded in the recorder/reproducer 108, it replaces the PCR value (PCR-B1) read after this in the execution step 1205 with the STC count value (PCR-B2) read from the first STC counter 109.

Therefore, it is made to reproduce a stream by making the STC count value of the first STC counter 109 into reference time at the time of reproduction as shown in Fig. 15. The control operation in the execution step 1208 by the reproduction bit rate and the picture bit rate is the same as the control operation in execution step 508 as shown in Fig. 5.

According to the above rapid traverse and special reproduction of already return are realizable with the composition described above.

According to the above-described process, recorded data can be reproduced not at the bit rate of the TS at the time of recording operation but at the bit rate of the TS of the recorded signal. Here, in order to make the output of the recording/reproducing interface 102 an MPEG-2 compliant stream, the recording/reproducing interface 102 may be configured to replace the Low Delay Mode contained in the Sequence Header Extension in the MPEG-2 video data stream, the Broken Link contained in the GOP head portion, the Temporal Reference contained in the picture header, and the like.

Moreover, although the recording/reproducing interface 102 is so configured that upon each completion of transferring I-picture data a subsequent I-picture data is transferred after a couple of frames of time, it is also configured that the transfer time of the I-picture is previously calculated and then a clearance time is defined in accordance with the pre-calculated transfer time. For example, if the transfer time of I-picture is rather long, it is made to shorten the clearance time, i.e., a latency time until the initiation time for transferring the subsequent I-picture. By doing in such a way, variation in video frames capable of displaying within a certain time can be reduced.

As described above, the present invention can provide an extremely preferable digital broadcast recording/reproducing apparatus which is able to determine the bit rate at the time of recording operation in accordance with the bit rate of the recorded video data and audio data, so that the bit rate at the time of reproducing operation is reduced lower than the bit rate at the time of recording operation.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A digital broadcast recording/reproducing apparatus, comprising:
a tuner for receiving a digital-broadcast signal to output a predetermined transport stream (TS);
a recording signal generator for generating a partial TS by extracting packets associated with a prescribed broadcast program from the predetermined TS to deliver the partial TS to a record medium;
a recorder for recording the partial TS delivered from the recording signal generator on the record medium;
a control table processor for creating a control table with an entry of a data amount of video signals and an entry of a time information, for every time that the recording signal generator provides the record medium with a prescribed reproducing unit of the video signal contained in the partial TS;
a maximum bit rate calculator for calculating bit rates of the prescribed reproducing unit of the video signal from the prescribed reproducing unit of the video signal and the time information at the time that the control table processor has created the control table;
a signal processor for reproducing the partial TS from the record medium by setting the bit rate higher than the maximum bit rate by a prescribed value as a reproduction bit rate of the partial TS reproduced from the record medium; and
a TS (TS) for depacketizing the partial TS provided from signal processor.

2. A digital broadcast recording/reproducing apparatus as claimed in claim 1, wherein the signal processor inserts a null packet into the partial TS according to the ratio of the reproduction bit rate and the prescribed reproducing unit of the video signal at the time of reproducing the prescribed program with a normal speed.

3. digital broadcast recording/reproducing apparatus as claimed in any one of claims 1 and 2, further comprising a free-running STC counter;
wherein the control table processor
calculates a first difference value of the STC count value and a PCR (Program Clock Reference) value, for every time that the recording signal generator detects a packet containing the PCR value from the partial TS of the prescribed program, and
creates the time information of the control table from the sum of the STC count value and the first difference value, for every time that the recording signal generator provides the prescribed reproduction unit of the video signal to the record medium,
and wherein the signal processor calculates a second difference value of the STC count value on the control table corresponding to the prescribed reproduction unit of the video signal and the STC count value of the STC counter, at the time that a head portion packet of the prescribed reproduction unit of the video signal reproduced from the record medium is provided to the TS decoder, and provides a data packet to the TS decoder as the head portion packet of the prescribed reproduction unit of the video signal when the STC count value on the control table corresponding to the prescribed reproduction unit of the video signal is not larger than the sum of the second difference value and the STC count value of the STC counter, while, when the STC count value is larger than the sum, the signal processor provides the TS decoder with the partial TS as a null packet at the reproduction bit rate at the time of reproducing the prescribed program with the normal reproduction speed.

4. A digital broadcast recording/reproducing apparatus as claimed in claim 3, wherein the signal processor substitutes a PCT (Program Clock Reference) value with a sum of the STC count value of the STC counter and the second difference value, at the time that a packet containing the PCR value from the partial TS reproduced from the record medium.

5. A digital broadcast recording/reproducing apparatus as claimed in claim 4, wherein, upon a fast-forward or fast-reverse trick play reproducing operation, the signal processor provides the TS decoder with a MPEG-2 video signal contained in the partial TS reproduced from the record medium, by not only adding a packet having the STC count value on the control table corresponding to the prescribed reproducing unit as the PCR value before providing the prescribed reproducing unit of the video signal to the TS decoder, but also setting a discontinuity indicator flag to the packet.

6. A digital broadcast recording/reproducing apparatus as claimed in any one of claims 3 and 4, wherein, the signal processor replaces the PCR value or a time-stamp value with the STC count value of the STC counter, when the PCR value or the time-stamp value has been detected.

7. A digital broadcast recording/reproducing apparatus as claimed in any one of claims 1 through 5, the prescribed reproducing unit is a GOP or a picture data at a coding unit of the MPEG-2 video signal.

8. A digital broadcast recording/reproducing apparatus as claimed in any one of claims 1 through 4, wherein the signal processor detects at least one of a Payload Unit Start Indicator contained in the TS and a Random Access Indicator contained in an Adaptation Field, or at least one of a Sequence Header Code, a Group Start Code and a Picture Start Code contained in the video stream for detecting the prescribed reproduction unit of the video signal.

9. A digital broadcast recording/reproducing apparatus as claimed in any one of claims 1 through 4, wherein, at a time of reproducing accumulated TSs with a fixed bit rate, a maximum bit rate or a bit rate higher than the maximum bit rate by a prescribed value is reproduced by being set as a reproduction bit rate of the partial TS.

10. A digital broadcast recording/reproducing apparatus as claimed in claim 9, further comprising a depacketizer, and wherein, at a time of normal speed reproduction, the depacketizer provides data packets, while interposing null packets among the data packets in accordance with a ratio of the reproduction bit rate and the fixed bit rate.

11. A digital broadcast recording/reproducing apparatus according to claim 10, wherein, upon detection of packet containing a first PCR value after an initiation of normal reproduction, a difference value of the PCR value and a free-running STC count value is detected, and wherein, upon detection of packet containing following PCR, the PCR is replaced by a sum of the difference value and the STC count value.
